# EUROPÄISCHE PATENTSCHRIFT

(11) **EP 2 844 970 B1**
(45) Veröffentlichungstag und Bekanntmachung des Hinweises auf die Patenterteilung: **03.08.2016**
(21) Anmeldenummer: 13727572.3
(22) Anmeldetag: 31.05.2013
(51) Int. Cl.: G01K 5/48, H01C 7/12, H01T 1/14, H01T 1/16

(54) **ÜBERSPANNUNGSABLEITER FÜR HOHE SPANNUNGEN**
HIGH VOLTAGE SURGE ARRESTER
PARASURTENSEUR HAUTE TENSION

(30) Priorität: 19.06.2012 DE 102012210331
(43) Veröffentlichungstag der Anmeldung: 11.03.2015
(73) Patentinhaber: Siemens Aktiengesellschaft, 80333 München (DE)
(72) Erfinder: PREIDEL, Axel, 91054 Buckenhof (DE)
(86) Internationale Anmeldenummer: PCT/EP2013/061229
(87) Internationale Veröffentlichungsnummer: WO 2013/189714

(56) Entgegenhaltungen:
- DE-A1- 3 632 224
- JP-A- 2007 335 794
- US-A- 5 191 503
- US-A1- 2011 194 222

## Beschreibung

Die Erfindung betrifft einen Überspannungsableiter für hohe Spannungen mit einem Hochspannungsanschluss, der mit einem einen nichtlinearen Widerstand bildenden Ableiterblock verbunden ist, und einem Temperatursensor zum Erfassen der Temperatur des Ableiterblocks.

Ein solcher Überspannungsableiter ist beispielsweise aus der DE 197 28 961 A1 bereits bekannt. Der dort offenbarte Überspannungsableiter ist für Hoch- oder Mittelspannungen ausgelegt und weist ein gasdichtes Kapselungsgehäuse auf, in dem ein Ableiterblock angeordnet ist. Der Ableiterblock besteht aus zylindrischen Ableitelementen, die aufeinander gestapelt und durch eine Spannvorrichtung miteinander verspannt sind. Die zylindrischen Ableitelemente bilden einen nicht linearen Widerstand und bestehen beispielsweise aus Zinkoxid. Zur Messung der Temperatur des Ableiterblocks ist ein Oberflächensensor vorgesehen, der die Temperatur des Ableiterblocks erfasst.

Aus der DE 10 2010 038 208 A1 ist ein Überspannungsableiter bekannt, bei dem eine Temperaturschwelle des Ableiterblocks mit Hilfe eines Kalt- oder Warmleiters erfasst wird.

Aus der US 2011/194222 A1 ist ferner ein artgemäßer Überspannungsableiter bekannt. Der Temperatursensor des aus der US 2011/194222 A1 bekannten Überspannungsableiters umfasst ein endothermes Material, das in einem thermischen Kontakt mit dem Ableiterblock steht und dessen Ausdehnung erfasst. Eine mechanisches Anzeigeelement übersetzt diese Ausdehnung in eine entsprechende Statusanzeige.

Die Temperaturmessung eines Ableiterblocks kann zur Überwachung des Alterungszustands des Überspannungsableiters verwendet werden. Durch die Umgebungstemperatur und der am Ableiter anliegenden Spannung wird die Temperatur des Ableiters verändert. Oberhalb einer bestimmten Temperatur wird der Überspannungsableiter thermisch instabil, es sei denn, die momentane Belastung, also die an dem Überspannungsableiter anliegende Spannung, wird verringert. Der jeweilige Punkt, an dem die thermische Instabilität beginnt, kann aus einem vorherbestimmten Kennlinienfeld abgeleitet werden, das u. a. die Ableitertemperatur als Parameter aufweist. Durch die Messung der Temperatur am Ableiterblock kann die Steuerung einer Anlage, in welche der Überspannungsableiter integriert ist, die Belastung am Ableiter in geeigneter Weise ändern, so dass der Überspannungsableiter wieder in seinen thermisch stabilen Bereich zurückkehrt.

Die fortdauernde Überwachung der Temperatur des Ableiterblocks während seines Betriebs ist jedoch aufwändig. Wie bereits weiter oben ausgeführt, ist bekannt, hierfür Oberflächensensoren einzusetzen, die in dem Ableiterblock integriert sind. Auch die Infrarotmessung des Ableitergehäuses ist aus der Praxis bekannt.

Aufgabe der Erfindung ist es, einen Überspannungsableiter der eingangs genannten Art bereitzustellen, der eine einfache und sicheren Erfassung der Temperatur des Ableiterblocks während seines Betriebs fortwährend ermöglicht.

Die Erfindung löst diese Aufgabe dadurch, dass der Temperatursensor die Änderung der Längsausdehnung des Ableiterblocks erfasst.

Erfindungsgemäß wird die Temperatur des Ableiterblocks anhand seiner temperaturabhängigen Längenausdehnung erfasst. Die Überprüfung der Längenausdehnung ist gegenüber den bisher eingesetzten Temperaturmessverfahren eine besonders einfache und kostengünstige Möglichkeit die Temperatur des in der Regel unter Hochspannung stehenden Ableiterblocks während seines Betriebs zu erfassen.

Der Ableiterblock kann in einem gasdichten Kapselungsgehäuse angeordnet sein. Abweichend hiervon ist der Überspannungsableiter ein gehäuseloser Überspannungsableiter.

Zweckmäßigerweise weist der Temperatursensor einen Dehnungsmessstreifen oder Mittel zum Erfassen einer mechanischen Spannung auf. Der Dehnungsmessstreifen oder die oder Mittel zum Erfassen einer mechanischen Spannung ist/sind an einem Bauteil angeordnet, an dem der Ableiterblock mit einem seiner Enden abgestützt ist. Selbstverständlich ist es auch möglich, ein starres Zwischenelement zwischen dem Bauteil, an dem der Dehnungsmessstreifen befestigt ist, und dem Ableiterblock vorzusehen, der die Längsausdehnung des Ableiterblocks direkt in eine Dehnung oder Spannung des Bauteils einleitet, an dem der Dehnungsmessstreifen oder die Mittel zum Erfassen einer mechanischen Spannung befestigt ist/sind. Diese sind vorteilhafterweise an dem vom Hochspannungsanschluss abgewandten Ende des sich in einer Längsrichtung erstreckenden Überspannungswandlers angeordnet.

Abweichend hiervon ist es im Rahmen der Erfindung möglich, dass der Temperatursensor einen Druckaufnehmer umfasst, an dem der Ableiterblock selbst oder ein starres Übertragungselement anliegt, an dessen von dem Druckaufnehmer abgewandten Ende der Ableiterblock abgestützt ist. Der Druckaufnehmer ist beispielsweise eine Membran oder eine Druckaufnehmerplatte. Gemäß dieser vorteilhaften Weiterentwicklung wird die Längsausdehnung des Ableiterblocks in den Druckaufnehmer eingeleitet, der sich dadurch ausdehnt oder spannt. Ist der Druckaufnehmer eine elastische Membran, stülpt sich diese bei einer Längenausdehnung des Ableiterblocks in eine Richtung aus. Diese Ausstülpung kann grundsätzlich durch beliebige Sensoren erfasst werden. Ist der Druckaufnehmer eine Spannplatte kann die mechanische Spannung beispielsweise mit einem Dehnungsmessstreifen erfasst werden.

Vorteilhafterweise sind Mittel zum optischen Überwachen einer Ausstülpung, Dehnung oder mechanischen Spannung des Druckaufnehmers vorgesehen. Diese optischen Mittel sind beispielsweise eine Kamera, in der eine Längenskala integriert ist.

Abweichend davon kann der Druckaufnehmer zwischen einer Längenskala und der Kamera angeordnet sein, so dass aufgrund dieser fluchtenden Anordnung zwischen Kamera, Druckaufnehmer und Längenmessskala die Längenausdehnung anhand der auf der Skala abgebildeten Kontur des Druckaufnehmers bequem abgelesen werden kann.

Es ist bevorzugt, dass der Ableiterblock einen Stapel von Ableiterelementen ausbildet, wobei Spannelemente zum Verspannen der Ableiterelemente vorgesehen sind. Die beispielsweise zylinderförmigen Ableiterelemente sind aus einem Material gefertigt, das zweckmäßigerweise einen nicht linearen Widerstand bildet. Zweckmäßigerweise sind die Ableiterelemente aus einem Metalloxid, wie Zinkoxid, gefertigt. Die Spannungsmittel bestehen aus einem elektrisch nicht leitenden Material.

Gemäß einer bevorzugten Ausgestaltung der Erfindung ist der Temperaturmesssensor von einer dem Erdpotenzial nahen Stelle am Überspannungsleiter angeordnet. Der Überspannungsleiter weist in diesem Falle eine Hochspannungsseite auf, an welcher ein Hochspannungspotenzial anliegt und ein von der Hochspannungsseite abgewandte Seite, welche mit dem Erdpotenzial verbunden ist. Wird der Temperaturmesssensor an dem Erdpotenzial nahen Ende angeordnet, entfällt eine in der Regel aufwändige Isolierung des Temperaturmesssensors auf Hochspannungspotenzial gegenüber einer Überwachungseinheit, die auf einem Erdpotenzial liegt. Die Überwachungseinheit ist beispielsweise in die Regelung einer Anlage integriert, von der der Überspannungsableiter ein Teil ist.

Vorteilhafterweise ist der Ableiterblock eine Säule von Ableiterelementen, die aufeinander gestapelt und durch Spannmittel miteinander verspannt sind. Die Spannmittel bestehen aus einem elektrisch isolierenden Material, wie z.B. aus einem mit Glasfasern verstärkten Kunststoff. Dieser Spannverband ist vorteilhafterweise in einem gasdichten Kapselungsgehäuse angeordnet. Vor dem Betrieb des Überspannungsableiters kann der Spannverband kalibriert werden, so dass jeder Längenausdehnung des Ableiterblocks eine bestimmte (mittlere) Temperatur zugeordnet werden kann. Ein zuvor ermitteltes Temperaturprofil des Ableiterblocks gestattet die Ermittlung der Temperatur aus der Längenausdehnung der Säule. Wie bereits ausgeführt, muss die Längenänderung nicht unmittelbar im Ableiter im Kapselungsgehäuse gemessen werden. Die Wirkung kann auch über geeignete Übertragungselemente an der Außenseite des Überspannungsableiters erfasst werden. Das gasdichte Kapselungsgehäuse besteht z.B. aus Porzellan.

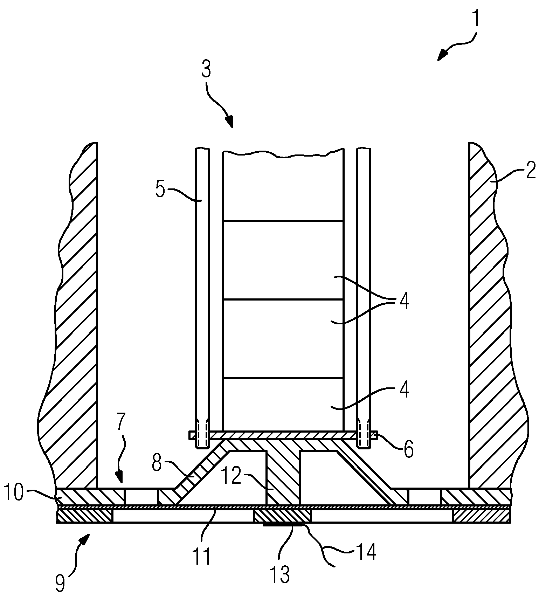

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei die
- Figur: ein Ausführungsbeispiel des erfindungsgemäßen Überspannungsableiters in einer quergeschnittenen Ansicht zeigt.

In der Figur ist in einer geschnittenen Seitenansicht ein Ausführungsbeispiel des erfindungsgemäßen Überspannungsableiters 1 gezeigt. Der Überspannungsableiter 1 weist ein nur schematisch dargestelltes Kapselungsgehäuse 2 auf, in dem ein Ableiterblock 3 angeordnet ist. Das Kapselungsgehäuse 2 ist gasdicht und mit einem Schutzgas befüllt. Der Ableiterblock 3 besteht aus Ableiterelementen 4, die jeweils zylindrisch ausgestaltet übereinander zu einer Säule gestapelt sind. Zum gegenseitigen Verspannen der Ableiterelemente 4 dient eine Spannvorrichtung, die aus einem elektrisch isolierenden Material besteht und von der in der Figur Isolierstäbe 5 gezeigt sind, die sich zwischen zwei Spannplatten erstrecken, von denen jedoch nur die untere Spannplatte 6 figürlich dargestellt ist.

Der gesamte Ableiterblock 3 liegt auf einem ersten Stützring 7 auf, der einen domartigen Mittenabschnitt 8 aufweist. Weiterhin ist ein zweiter unterer Stützring 9 vorgesehen, auf dem der erste Stützring 7 mit einem Flanschabschnitt 10 abgestützt ist. Zwischen den Flanschabschnitten 9 und 10 ist eine Druckentlastungsmembran 11 verklemmt.

Ferner ist erkennbar, dass der domartige Mittenabschnitt 8 des ersten Stützrings 7 über einen Zapfen 12 verfügt, mit dem eine Längenänderung des Ableiterblocks 3 in die Druckmembran 11 eingeleitet wird, die sich daraufhin ausstülpt. Diese Ausstülpung wird mit Hilfe eines auf dem zweiten Stützring aufgebrachten Dehnungsmessstreifens 13 erfasst und über eine Signalleitung 14 an eine figürlich nicht dargestellte zentrale Überwachungseinheit auf Erdpotenzial übertragen. Aufgrund der übertragenen Daten und einer zuvor erfolgten Kalibrierung kann aus den Messsignalen die Temperatur des Ableiterblocks 3 während des Betriebs des Überspannungsableiters 1 bestimmt werden.

Der Dehnungsmessstreifen ist an einer dem Erdpotenzial nahen Seite des Überspannungsleiters 1 angeordnet.

## Patentansprüche

1. Überspannungsableiter (1) für hohe Spannungen mit einem Hochspannungsanschluss, der mit einem einen nichtlinearen Widerstand bildenden Ableiterblock (3) verbunden ist, und einem Temperatursensor (13) zum Erfassen der Temperatur des Ableiterblocks (3),
**dadurch gekennzeichnet, dass** der Temperatursensor (3) die Änderung der Längsausdehnung des Ableiterblocks (3) erfasst.

2. Überspannungsableiter (1) nach Anspruch 1,
**dadurch gekennzeichnet, dass** der Temperatursensor einen Dehnungsmessstreifen (13) oder Mittel zum Erfassen einer mechanischen Spannung aufweist.

3. Überspannungsableiter (1) Anspruch 1,
**dadurch gekennzeichnet, dass** der Temperatursensor eine Druckaufnehmer (11) aufweist, an welcher der Ableiterblock (3) selbst oder ein starres Übertragungselement (12) anliegt, an dem der Ableiterblock (3) abgestützt ist.

4. Überspannungsableiter (1) nach Anspruch 3,
**gekennzeichnet durch**
Mittel zum optischen Überwachen einer Ausstülpung, Dehnung oder Spannung des Druckaufnehmers (11).

5. Überspannungsableiter (1) nach einem der vorhergehenden Ansprüche,
**dadurch gekennzeichnet, dass** der Ableiterblock (3) einen Stapel von Ableiterelementen (4) ausbildet, wobei Spannelemente (5,6) zum Verspannen der Ableiterelemente (4) vorgesehen sind.

6. Überspannungsableiter (1) nach einem der vorhergehenden Ansprüche,
**dadurch gekennzeichnet, dass** der Temperatursensor (13) an einer dem Erdpotenzial nahen Stelle am Überspannungsableiter (1) angeordnet ist.

7. Überspannungsableiter (1) nach einem der vorhergehenden Ansprüche,
**dadurch gekennzeichnet, dass** der Temperatursensor (13) über eine Signalleitung (14) mit einer Überwachungseinheit verbunden ist.

## Claims

1. Surge arrester (1) for high voltages comprising a highvoltage connection, which is connected to an arrester block (3) which forms a nonlinear resistance, and comprising a temperature sensor (13) for sensing the temperature of the arrester block (3),
**characterized in that**
the temperature sensor (3) senses the change in the longitudinal extent of the arrester block (3).

2. Surge arrester (1) according to Claim 1,
**characterized in that**
the temperature sensor has a strain gage (13) or means for sensing a mechanical tension.

3. Surge arrester (1) according to Claim 1,
**characterized in that**
the temperature sensor has a pressure pickup (11), on which the arrester block (3) itself or a rigid transmission element (12) on which the arrester block (3) is supported rests.

4. Surge arrester (1) according to Claim 3,
**characterized by**
means for optically monitoring a protuberance, expansion or tension of the pressure pickup (11).

5. Surge arrester (1) according to one of the preceding claims,
**characterized in that**
the arrester block (3) forms a stack of arrester elements (4), wherein tensioning elements (5, 6) for bracing the arrester elements (4) are provided.

6. Surge arrester (1) according to one of the preceding claims,
**characterized in that** the temperature sensor (13) is arranged at a point on the surge arrester (1) which is close to the ground potential.

7. Surge arrester (1) according to one of the preceding claims,
**characterized in that**
the temperature sensor (13) is connected to a monitoring unit via a signal line (14).

## Revendications

1. Parasurtenseur (1) pour des hautes tensions, comprenant une borne de haute tension, qui est reliée à un bloc (3) de parafoudre formant une résistance non-linéaire, et une sonde (13) de température, pour relever la température du bloc (3) de parafoudre,
**caractérisé en ce que**
la sonde (13) de température relève la variation de la dilatation en longueur du bloc (3) de parafoudre.

2. Parasurtenseur (1) suivant la revendication 1,
**caractérisé en ce que**
la sonde de température a une jauge de contrainte (13) ou des moyens de détection d'une tension mécanique.

3. Parasurtenseur (1) suivant la revendication 1,
**caractérisé en ce que**
la sonde de température a un enregistreur (11) de pression, sur lequel s'applique le bloc (3) de parafoudre soi-même ou un élément (12) de transmission rigide, sur lequel est appuyé le bloc (3) de parafoudre.

4. Parasurtenseur (1) suivant la revendication 3,
**caractérisé par**
des moyens de contrôle optique d'une excroissance, d'une dilatation ou d'une contrainte de l'enregistreur (11) de pression.

5. Parasurtenseur (1) suivant l'une des revendications précédentes,
**caractérisé en ce que**
le bloc (3) de parafoudre forme une pile d'éléments (4) de parafoudre, des éléments (5, 6) de serrage étant prévus pour serrer les éléments (4) de parafoudre.

6. Parasurtenseur (1) suivant l'une des revendications précédentes,
**caractérisé en ce que**
le capteur (13) de température est monté en un point proche du potentiel de terre du parasurtenseur (1).

7. Parasurtenseur (1) suivant l'une des revendications précédentes,
**caractérisé en ce que**
la sonde (13) de température est reliée à une unité de contrôle par une ligne (14) de signalisation.
